# EUROPÄISCHE PATENTANMELDUNG

(11) **EP 1 811 283 A1**
(43) Veröffentlichungstag der Anmeldung: **25.07.2007**
(21) Anmeldenummer: 07000200.1
(22) Anmeldetag: 05.01.2007
(51) Int. Cl.: G01N 17/00, G01N 27/83, G01N 27/20

(54) **Verfahren und Messvorrichtung zur Erfassung von Korrosionsschäden**

(30) Priorität: 23.01.2006 DE 102006003182
(71) Anmelder: TÜV Industrie Service GmbH, 80686 München (DE)
(72) Erfinder: Winter, Erwin, 80335 München (DE); Zauner, Christian, 86899 Landsberg (DE)
(74) Vertreter: Grünecker, Kinkeldey, Stockmair & Schwanhäusser Anwaltssozietät

(57) **Zusammenfassung**

Die vorliegende Erfindung bezieht sich ein Verfahren zur Erfassung von Korrosionsschäden bei einem zumindest teilweise erdbedeckten, elektrisch isolierten Behälter (2) und/oder wenigstens einer mit diesem verbundenen Rohrleitung (21) mit den Verfahrensschritten:
Anlegen einer Gleichspannung an dem Behälter (2) oder an der mit diesem verbundenen Rohrleitung (21) und an einer gegenüber Behälter (2) und Rohrleitung (21) im Wesentlichen elektrisch isolierten Stelle zum Ermitteln eines Widerstandswertes.
Anzeigen eines existierenden Korrosionsschadens mittels einer Anzeigeeinrichtung (8), wenn der ermittelte Widerstandswert geringer oder gleich des bestimmten Vorgabewertes ist.
Anschließend Durchführen einer Differenzierungsmessung zum Ermitteln, ob ein Korrosionsschaden an dem Behälter (2) oder der Rohrleitung (21) vorliegt. Anlegen einer Wechselspannung oder Gleichspannung an einen ersten Wechselspannungskontakt (5) an der Rohrleitung (21) und einen zweiten Wechselspannungskontakt (6) an einer gegenüber Behälter (2) und Rohrleitung (21) im Wesentlichen elektrisch isolierten Stelle.
Durchführen einer Magnetfeldmessung mittels eines Magnetfeldsensors (19) zum Bestimmen der Leckstromrichtung.

Darüber hinaus stellt die Erfindung auch eine Messvorrichtung zu Erfassung von Korrosionsschäden zur Verfügung.

## Beschreibung

Die Erfindung betrifft ein Verfahren und eine Messvorrichtung zur Erfassung von Korrosionsschäden bei erdbedeckten, elektrisch isolierten Behältern und/oder mit diesem verbundenen Rohrleitungen.

Gegenwärtig werden solche Behälter oder Rohrleitungen durch unterschiedliche Verfahren oder Vorrichtungen überprüft.

Es besteht beispielsweise die Möglichkeit, eine Messvorrichtung mit einer Gleichspannungsquelle und zwei Kontakten zur Überprüfung eines Isolationswiderstandes einzusetzen. Dabei wird ein erster Kontakt an dem zu messenden Objekt, zum Beispiel ein Flüssiggastank oder eine Rohrleitung, angebracht. Ein zweiter Kontakt wird dem den zu messenden Behälter umgebenden Erdreich zugeordnet. Zwischen den Kontakten wird eine Gleichspannung angelegt. Bei einer intakten Isolierung des Behälters wird ein ausreichend hoher Isolationswiderstand festgestellt. Liegt der Widerstandswert unterhalb eines Richtwertes, kann ein Isolationsschaden entweder an dem Behälter und/oder der Rohrleitung vorliegen. Bei diesem Messverfahren müssen die Gleichstromkontakte jeweils an die separierten Bauteile angeschlossen werden, um somit zumindest eine Definition des geschädigten Einzelteils vornehmen zu können. Die zahlreichen Messschritte können auch keinen Hinweis auf die Stelle des Isolationsschadens geben. Somit ist die Fehlersuche sehr zeitaufwändig.

Der Erfindung liegt die Aufgabe zu Grunde, ein Verfahren und eine Messvorrichtung der eingangs genannten Art dahingehend zu verbessern, dass neben der Messung des Isolationswiderstandes auch das Auffinden der Stelle des Isolationsschadens schneller möglich ist.

Diese Aufgabe wird durch die Merkmale der Ansprüche 1 und 11 gelöst.

Erfindungsgemäß wird zunächst ein erster Gleichspannungskontakt an dem Behälter oder an der mit diesem verbundenen Rohrleitung und ein zweiter Gleichspannungskontakt an einer gegenüber Behälter und Rohrleitung im Wesentlichen elektrisch isolierten Stelle angebracht. Durch Anlegen einer Gleichspannung und Messen des Stroms wird ein Widerstandswert ermittelt. Ist dieser größer als ein bestimmter Vorgabewert, wird das Verfahren beendet, da kein Isolationsschaden vorhanden ist. Ist jedoch der Widerstandswert geringer oder gleich des bestimmten Vorgabewertes, wird auf einen Korrosionsschaden des Behälters oder der Rohrleitung geschlossen. Dann folgt eine Differenzierungsmessung, um zu ermitteln, ob der Korrosionsschaden an dem Behälter oder an der Rohrleitung vorliegt. Dazu wird ein erster Wechselspannungskontakt an der Rohrleitung und ein zweiter Wechselspannungskontakt an einer gegenüber Behälter und Rohrleitung im Wesentlichen elektrisch isolierten Stelle angebracht. Dann wird eine Wechselspannung oder Gleichspannung an den Wechselspannungskontakten angelegt. Aufgrund des Korrosionsschadens fließt ein Leckstrom und mittels eines Magnetfeldsensors wird eine Magnetfeldmessung zum Bestimmen der Leckstromrichtung durchgeführt. Die Leckstromrichtung zeigt die Richtung der Stelle an der ein Korrosionsschadens entweder an dem Behälter oder der Rohrleitung vorliegt.

Erfindungsgemäß wird für dieses Verfahren eine Messvorrichtung eingesetzt, die eine Wechselspannungsquelle aufweist. Ein erster Wechselspannungskontakt ist an der Rohrleitung und der zweite Wechselspannungskontakt an einem gegenüber dem Behälter isolierten Domschacht oder in dem den Behälter umgebenden Erdreich angebracht. Die Vorrichtung weist einen Magnetfeldsensor zur Feststellung der Leckstromrichtung und ob ein Korrosionsschaden bei Behälter oder Rohrleitung vorliegt, auf.

Erfindungsgemäß ist es möglich, zunächst durch Anlegen einer Gleichspannung an dem Behälter oder an der mit diesem verbundenen Rohrleitung und an einer gegenüber dem Behälter und Rohrleitung im Wesentlichen elektrisch isolierten Stelle einen Widerstandswert zu ermitteln. Wenn dieser Widerstandswert geringer oder gleich eines bestimmten Vorgabewertes ist, existiert ein Korrosionsschaden an dem Behälter oder der Rohrleitung und das Prüfverfahren wird fortgesetzt. Um festzustellen, ob der Behälter oder die Rohrleitung beschädigt sind, wird eine Wechselspannung an der Rohrleitung und an einer gegenüber Behälter und Rohrleitung im Wesentlichen elektrisch isolierten Stelle angebracht. Ein Magnetfeldsensor kann die Leckstromrichtung feststellen und somit den Korrosionsschaden dem Behälter oder der Rohrleitung zuweisen.

Vorzugsweise beträgt der bestimmte Widerstandswert im Wesentlichen 30 bis 100 KΩ oder insbesondere 50 bis 70 KΩ. Dieser Widerstandswert wird von dem Behälter vorgegeben, der z. B. ein erdbedeckten Flüssiggas- oder Heizöltank sein kann. Das erfindungsgemäße Verfahren und die Messvorrichtung sind aber auch für andere Behälter geeignet.

Die bevorzugte Prüfspannung beträgt im Wesentlichen 4 bis 20 V oder insbesondere 8 bis 12 V. Durch zahlreiche Versuche wurde festgestellt, dass dieser Spannungsbereich nicht mehr von anderen Elementen in der näheren Umgebung beeinflusst wird und somit Verfälschungen des Ergebnisses verhindern werden.

Erfindungsgemäß können alle notwendigen Messgeräte in einer Messvorrichtung angebracht sein. Diese Messvorrichtung kann insbesondere tragbar eingesetzt werden, um somit eine mobile und flexible Prüfung zuzulassen.

Um die Messung präzise durchführen zu können, wird das durch das alternierende Magnetfeld erzeugte Messsignal durch hochverstärkende Operationsverstärker und selektive Frequenzfilter aufbereitet. Vorzugsweise bewegt sich der Frequenzbereich des alternierenden Magnetfeldes zwischen 0,1 und 30 Hz.

Es ist denkbar, die Prüfung bei 0 Hz durchzuführen, so dass eine Gleichstromzange eingesetzt werden kann und ein weiterer Verfahrensschritt, in welchem die Wechselspannung angelegt wird, entfallen kann.

In einer alternativen Ausführung kann der Magnetfeldsensor in der Messvorrichtung integriert sein.

Vorzugsweise wird der Magnetfeldsensor unabhängig von der Messvorrichtung bewegt. Insbesondere kann er entlang der Rohrleitung bewegt werden.

Vorteilhafterweise kann der erste Gleichspannungskontakt an der Rohrleitung als Wechselspannungskontakt benutzt werden. Des Weiteren kann der zweite Gleichspannungskontakt an einer gegenüber Behälter und Rohrleitung im Wesentlichen elektrisch isolierten Stelle als zweiter Wechselspannungskontakt benutzt werden. Dadurch entfallen zusätzliche Arbeitsschritte, die separat voneinander angebrachter Gleich- oder Wechselspannungskontakte verursachen würden.

Um in einfacher Weise eine Überprüfung von Behälter und Rohrleitung auf einen Korrosionsschaden oder sonstige Isolationsfehler durchzuführen, wird der erste Wechselspannungskontakt bevorzugt an der Rohrleitung innerhalb des Domschachts angebracht. Somit wird ein Freilegen der Leitung in dem Erdreich zwischen Domschacht und Hausanschluss vermieden.

In einer Variante der Erfindung kann der zweite Wechselspannungskontakt ein Erdspieß oder dergleichen sein. Dieser Erdspieß erlaubt eine leichte Handhabung, da er ohne große Mühe in das Erdreich eingebracht werden kann.

Um die Messergebnisse nicht zu verfälschen, kann der zweite Spannungskontakt in Form eines Erdspieß oder dergleichen in einem bestimmten Abstand zu dem Domschacht und dem Behälter angebracht werden.

Vorzugweise liegt der Frequenzbereich der Wechselspannung in einem Bereich von ungefähr 0 bis 30 Hz oder insbesondere 0 bis 1 Hz.

Eine Auswerteeinrichtung kann die Anzeigeeinrichtung mit den Spannungs- , Strom- und Widerstandswerten versorgen, um somit eine schnelle Darstellung dieser Werte zu ermöglichen. Es besteht die Möglichkeit, durch umschalten der Anzeigeeinrichtung, die Werte einzeln anzuzeigen. Überschreitet ein Wert den Vorgabewert, können optische oder akustische Signale ausgegeben werden.

Vorteilhafterweise ist der Magnetfeldsensor eine portable Stromzange. Diese kann unabhängig von der Messvorrichtung eingesetzt werden.

Ein Ausführungsbeispiel der Erfindung wird im Folgenden unter Hinweis auf die beigefügten Zeichnungen näher beschrieben. Es zeigen:
- Fig. 1: eine Schnittansicht einer erfindungsgemäßen Messvorrichtung
- Fig. 2: eine Schnittansicht einer alternativen Ausführungsform einer erfindungsgemäßen Messvorrichtung.

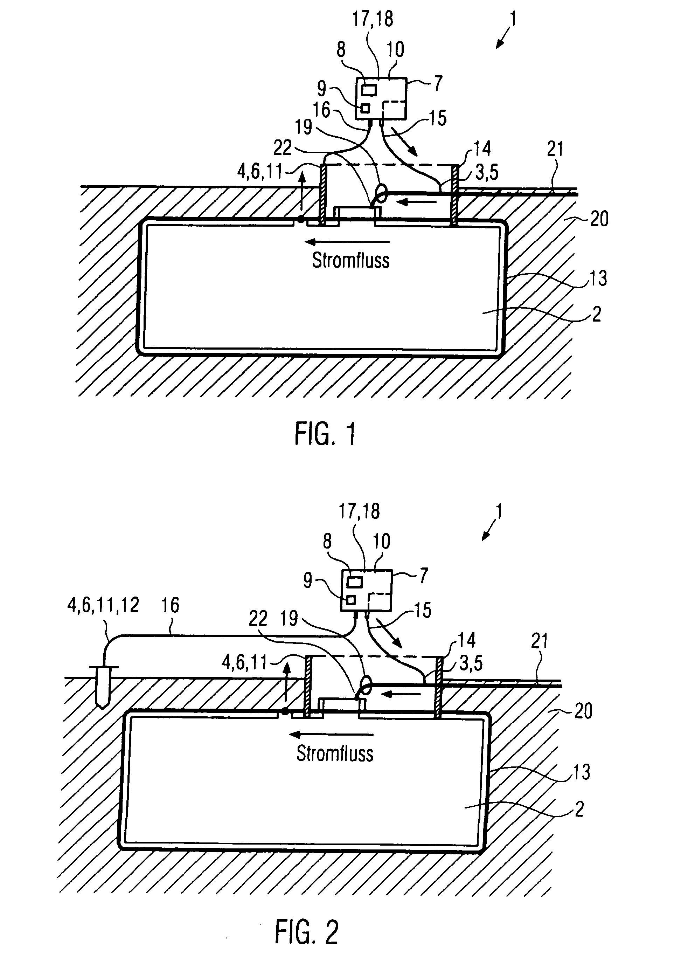

In Figur 1 ist als zu überprüfender Behälter 2 ein Flüssiggas- oder Heizöltank sowie eine mit diesem verbundene Rohrleitung 21 in einem Erdreich 20 so angeordnet, dass der Behälter 2 und die Rohrleitung 21 nahezu vollständig von diesem umgeben sind. In dem Erdreich 20 ist nur ein Domschacht 14 zum Nachfüllen des Flüssiggas- bzw. Heizöltanks 2 von außen zugänglich. Der Behälter 2 ist von einer Isolierung 13 umgeben. Die Isolierung ist auch zwischen dem Domschacht 14 und dem Behälter 2 sowie zwischen dem Domschacht 14 und der Rohrleitung 21 angeordnet.

Mittels einer erfindungsgemäßen Messvorrichtung 1 wird ein Isolationswiderstand des Behälters 2 relativ zu dem Erdreich 20, des Domschachts 14 relativ zum Behälter 2 oder auch des Domschachts 14 relativ zu dem Erdreich 20 ermittelt. Ferner wird ein Isolationswiderstand einer Rohrleitung 21 relativ zu dem Erdreich 20 oder des Domschachts 14 relativ zu der Rohrleitung 21 ermittelt. Dazu sind entsprechende Kontakte 3 und 4 vorgesehen.

Mittels der Messvorrichtung 1 wird die Stromflussrichtung gemessen. Weist die Isolierung des Behälters 2 und/oder der Rohrleitung 21 einen Isolationsfehler, z.B. durch einen Korrosionsschaden auf, fließt an dieser Fehlerstelle ein Leckstrom. Auf Grund des ohmschen Gesetzes R = U/I sinkt durch den Spannungsverlust des Leckstroms auch der gemessene Widerstand.

Die Messvorrichtung 1 vergleicht einen Vorgabewert mit dem gemessenen Widerstandswert und gibt über eine Kontrollanzeige ein entsprechendes Signal aus. So kann z.B. eine Wamlampe aufleuchten oder ein akustisches Signal ausgegeben werden, wenn der gemessene Widerstandswert den Vorgabewert unterschreitet.

Bei dem dargestellten Ausführungsbeispiel der Figur 1 ist ein erster Gleichspannungskontakt 3 an der Rohrleitung 21 angebracht und ein zweiter Gleichspannungskontakt 4 dem Domschacht 14 zugeordnet. Der zweite Kontakt 4 dient als Massekontakt bei der Überprüfung der Isolierung zwischen Behälter 2 und Domschacht 14.

Die entsprechenden Kontakte 3, 4 sind über eine Verbindung 15, 16, wie beispielsweise eine Kabelverbindung, mit einer Auswerteeinrichtung 7 als Teil der Messvorrichtung 1 verbunden. Diese Auswerteeinrichtung 7 kann ebenfalls eine Wechselspannungsquelle 17 enthalten sowie einen Gleichrichter 18, eine Anzeigeeinrichtung 8, eine Prüftaste 9 und dergleichen.

In der Figur 2 ist der zweite Kontakt 4 in einer alternativen Position dargestellt. Der zweite Kontakt 4 dient als Massekontakt, wobei dieser durch einen in das Erdreich 20 eingesteckten Erdspieß 12 als Massekontakt 11 realisiert ist.

Der Gleichrichter 18 wird insbesondere dazu verwendet, die eingehende Wechselspannung aus der Wechselspannungsquelle 17 in eine Gleichspannung zu wandeln. Mit der Gleichspannung wird der Widerstandswert des Behälters 2 ermittelt.

Wenn die Ermittlung des Widerstandswertes einen niedrigeren oder gleichen Widerstandswert relativ zu dem Vorgabewert aufweist, liegt ein Isolationsfehler vor. Dann wird die Fehlerstelle ermittelt. Dazu wird ein erster Wechselspannungskontakt 5 an der Rohrleitung 21 angebracht. Und ein zweiter Wechselspannungskontakt 6 wird als Massekontakt mit dem Domschacht 14 verbunden. In einer alternativen Ausführungsform kann dieser zweite Wechselspannungskontakt durch einen in das Erdreich 20 eingesteckten Erdspieß 12 realisiert werden. Der erste Wechselspannungskontakt 5 wird in unmittelbarer Nähe des Domschachts angebracht. Ein Magnetfeldsensor 19 wird an der Rohrleitung 21 und möglichst direkt neben einem Anschlusspunkt 22 der Rohrleitung an dem Behälter 2 angebracht. Dieser Magnetfeldsensor 19 kann z.B. eine Stromzange sein. Der Magnetfeldsensor 19 kann auch stationär relativ zur Rohrleitung angeordnet sein und die Stromrichtung anzeigen.

Die Wechselspannungsquelle 17 legt eine Prüfspannung von 5 bis 20 V an. Das durch den Stromfluss bedingte alternierende Magnetfeld wird mittels Magnetfeldsensor 19 und von hochverstärkenden Operationsverstärker und selektiven Frequenzfilter aufbereitet. Vorzugsweise beträgt die Frequenz des alternierenden Magnetfeldes 0,1 bis 30 Hz. Die Stromzange 19 wertet das Messsignal aus und zeigt die Stromflussrichtung an, die der Richtung des Leckstromes zur Stelle eines Isolationsschadens entspricht.

In einer alternativen Ausführungsform kann die Wechselspannungsquelle 17 eine Gleichspannungsquelle sein.

Findet die Ermittlung der Leckstromrichtung bei 0 Hz statt, muss keine Wechselspannung eingesetzt werden und eine Gleichstromzange kann angelegt werden.

Vorteilhafterweise kann der erste Gleichspannungskontakt 3 dem ersten Wechselspannungskontakt 5 entsprechen und der zweite Gleichspannungskontakt 4 dem zweiten Wechselspannungskontakt 6. Dadurch kann ein zeitaufwändiger Wechsel der Spannungskontakte während des Prüfverfahrens entfallen.

In einer alternativen Ausführungsform kann der Magnetfeldsensor in Form einer Stromzange entlang der Rohrleitung 21 innerhalb des Domschachts 14 bewegt werden. Der Sensor kann auch außerhalb des Domschachts eingesetzt werden, wobei ein Loch in das Erdreich bis zur Rohrleitung 21 gegraben wird.

Selbstverständlich kann der Behälter 2 mit mehreren Rohrleitungen 21 verbunden sein und jede Rohrleitung separat entsprechend überprüft werden.

Mittels der Anzeigeeinrichtung 8 sind verschiedene Daten der Messvorrichtung 1 wie beispielsweise Prüfspannung, die zwischen den Kontakten 3, 4 bzw. 5, 6 angelegt ist, Stromstärke und gemessener Isolationswiderstandswert darstellbar. Insbesondere die Richtung des Leckstroms wird angezeigt.

Die Prüftaste 9 dient zum Eigentest der Messvorrichtung 1, indem beispielsweise die Messung über einen entsprechenden in der Vorrichtung enthaltenen Normwiderstand mit entsprechender Prüfspannung und sich ergebendem Stromwert durchgeführt wird.

Die Messvorrichtung 1 ist insbesondere tragbar zusammen mit einer Auswerteeinrichtung 7, Verbindungen 15 und 16, Erdspieß 12, Magnetfeldsensor 19, einer integrierten Wechselspannungsquelle 17 und einem Gleichrichter 18.

Die Kontakte 3, 4 und 5, 6 zwischen Verbindungen 15, 16 und Behälter 2 bzw. Rohrleitung 21 können in unterschiedlicher, lösbarer Weise erfolgen, wie beispielsweise durch Klammern.

Gemäß der Erfindung besteht die Möglichkeit, trotz im Erdreich generierter, galvanischer Spannungseinkopplungen und entsprechender Ausgleichsströme den Isolationswiderstand schnell und genau zu messen, ohne dass die Messung verfälscht wird, und insbesondere die Richtung des Leckstromes zu erfassen. Dabei wird in der Regel ein Isolationswiderstand von ca. 60 KΩ oder mehr als ausreichend betrachtet, d.h. die entsprechende Isolation wird als ausreichend betrachtet.

## Patentansprüche

1. Verfahren zur Erfassung von Korrosionsschäden bei einem zumindest teilweise erdbedeckten, elektrisch isolierten Behälter (2) und/oder wenigstens einer mit diesem verbundenen Rohrleitung (21) mit den Verfahrensschritten:
- Anlegen einer Gleichspannung an zwei Kontakte (3, 4) zum Ermitteln eines Widerstandswertes, wobei der erste Gleichspannungskontakt (3) an dem Behälter (2) oder an der mit diesem verbundenen Rohrleitung (21) und der zweite Gleichspannungskontakt (4) an einer gegenüber Behälter (2) und Rohrleitung (21) im Wesentlichen elektrisch isolierten Stelle angebracht wird,
- Beenden des Verfahrens wenn der ermittelte Widerstandswert größer als ein bestimmter Vorgabewert ist, oder
- Anzeigen eines existierenden Korrosionsschadens des Behälters (2) oder der Rohrleitung (21) mittels einer Anzeigeeinrichtung (8), wenn der ermittelte Widerstandswert geringer oder gleich des bestimmten Vorgabewertes ist, und
- anschließend Durchführen einer Differenzierungsmessung zum Ermitteln, ob ein Korrosionsschaden an dem Behälter (2) oder der Rohrleitung (21) vorliegt, mit folgenden Schritten:
a) Anlegen einer Wechselspannung oder Gleichspannung an einen ersten und einen zweiten Wechselspannungskontakt (5, 6), wobei der erste Wechselspannungskontakt (5) an der Rohrleitung (21) und der zweite Wechselspannungskontakt (6) an einer gegenüber Behälter (2) und Rohrleitung (21) im Wesentlichen elektrisch isolierten Stelle angebracht wird,
b) Durchführen einer Magnetfeldmessung mittels eines Magnetfeldsensors (19) zum Bestimmen der Leckstromrichtung.

2. Verfahren nach Anspruch 1, wobei der bestimmte Widerstandswert in einem Bereich von ungefähr 30 bis 100 kΩ und vorzugsweise in einem Bereich von 50 bis 70 kΩ liegt.

3. Verfahren nach Anspruch 1 oder 2, wobei die Wechselspannung in einem Bereich von ungefähr 4 bis 20 V und vorzugsweise in einem Bereich von 8 bis 12 V liegt.

4. Verfahren nach einem der vorangehenden Ansprüche, wobei die Ermittlung des Widerstandswertes aus Spannungswert und gemessenem Stromwert mittels einer Messvorrichtung (1) erfolgt.

5. Verfahren nach Anspruch 4, wobei eine tragbare Messvorrichtung (1) eingesetzt wird.

6. Verfahren nach einem der vorangehenden Ansprüche, wobei der Magnetfeldsensor (19) ein Messsignal mittels eines hochverstärkenden Operationsverstärkers und eines selektiven Frequenzfilters aufbereitet.

7. Verfahren nach einem der vorangehenden Ansprüche, wobei der Magnetfeldsensor (19) unabhängig von der Messvorrichtung (1) handhabbar ist.

8. Verfahren nach einem der vorangehenden Ansprüche, wobei der Magnetfeldsensor (19) manuell entlang zumindest eines Abschnitts der Rohrleitung (21) bewegt wird.

9. Verfahren nach einem der vorangehenden Ansprüche, wobei der erste und/oder der zweite Gleichspannungskontakt (3, 4) als erster bzw. zweiter Wechselspannungskontakt (5, 6) an der Rohrleitung (21) eingesetzt wird.

10. Messvorrichtung (1) zur Erfassung von Korrosionsschäden bei einem zumindest teilweise erdbedeckten, elektrisch isolierten Behälter (2) oder einer mit diesem verbundenen Rohrleitung (21), welche Messvorrichtung (1) eine Wechselspannungsquelle (17) aufweist, die mit zwei Wechselspannungskontakten (5, 6) verbunden ist, von denen der erste (5) an der Rohrleitung (21), und der zweite (6) an einem gegenüber dem Behälter (2) isolierten Domschacht (14) oder in dem den Behälter (2) umgebenden Erdreich (20) angebracht ist,
und welche einen Magnetfeldsensor (19) zur Feststellung der Leckstromrichtung und damit zur Ermittlung eines Korrosionsschadens bei Behälter (2) oder Rohrleitung (21) aufweist.

11. Messvorrichtung nach Anspruch 10, wobei der Effektivwert der Wechselspannung in einem Bereich von 4 bis 20 V und insbesondere in einem Bereich von 8 bis 12 V liegt.

12. Messvorrichtung nach einem der Ansprüche 10 oder 11, wobei die Messvorrichtung tragbar ist.

13. Messvorrichtung nach einem der vorangehenden Ansprüche 10 bis 12, wobei der Magnetfeldsensor (19) einen hochverstärkenden Operationsverstärker und einen selektiven Frequenzfilter aufweist.

14. Messvorrichtung nach einem der vorangehenden Ansprüche 10 bis 13, wobei der Magnetfeldsensor (19) in der Messvorrichtung (1) integriert ist.

15. Messvorrichtung nach einem der vorangehenden Ansprüche 10 bis 13, wobei der Magnetfeldsensor (19) separat zu der Messvorrichtung (1) vorgesehen ist.

16. Messvorrichtung nach einem der vorangehenden Ansprüche 10 bis 15, wobei der erste Wechselspannungskontakt (5) an der Rohrleitung (21) innerhalb des Domschachts (14) liegt.

17. Messvorrichtung nach einem der vorangehenden Ansprüche 10 bis 16, wobei der erste und/ oder zweite Wechselspannungskontakt (5,6) als erster bzw. zweiter Gleichspannungskontakt (3,4) einsetzbar sind.

18. Messvorrichtung nach einem der vorangehenden Ansprüche 10 bis 17, wobei der zweite Wechselspannungskontakt (6) von Behälter und Rohrleitung beabstandeter Erdspieß (12) oder dergleichen ist.

19. Messvorrichtung nach einem der vorangehenden Ansprüche 10 bis 18, wobei der Frequenzbereich der Wechselspannung in einem Bereich von ungefähr 0 bis 30 Hz und vorzugsweise in einem Bereich von 0 bis 5 Hz und insbesondere bevorzugt in einem Bereich von 0 bis 1 Hz liegt.

20. Messvorrichtung nach einem der vorangehenden Ansprüche 10 bis 19, wobei diese eine Anzeigeeinrichtung (8) und Auswerteeinrichtung (7) aufweist.

21. Messvorrichtung nach einem der vorangehenden Ansprüche 10 bis 20, wobei die Anzeigeeinrichtung (8) optisch, akustisch oder in sonstiger Weise anzeigt.

22. Messvorrichtung nach einem der vorangehenden Ansprüche 10 bis 21, wobei der Magnetfeldsensor (19) ein manuell entlang der Rohrleitung bewegbarer Sensor und insbesondere eine Stromzange ist.
